# EUROPÄISCHE PATENTSCHRIFT

(11) **EP 3 625 638 B1**
(45) Veröffentlichungstag und Bekanntmachung des Hinweises auf die Patenterteilung: **19.05.2021**
(21) Anmeldenummer: 18719602.7
(22) Anmeldetag: 02.05.2018
(51) Int. Cl.: G05D 11/13, B01F 15/00, B29B 7/24, B29B 7/28, B29B 7/74, B29B 7/94

(54) **PRODUKTIONSSYSTEM ZUR HERSTELLUNG VON FORMULIERUNGEN**
PRODUCTION SYSTEM FOR PREPARATION OF FORMULATIONS
SYSTÈME DE PRODUCTION DESTINÉ À LA FABRICATION DE FORMULATIONS

(30) Priorität: 19.05.2017 EP 17171952
(43) Veröffentlichungstag der Anmeldung: 25.03.2020
(73) Patentinhaber: BASF Coatings GmbH, 48165 Münster (DE)
(72) Erfinder: JOEGE, Frank, 48165 Münster (DE); HUESER, Bernhard, 48165 Münster (DE); BERG, Ralf, 48165 Münster (DE); GROETSCH, Stefan, 48165 Münster (DE); KOLBE, Michael, 48165 Münster (DE); FOUILLET, Jeremy, 48165 Münster (DE); BERG, Jan, 48165 Münster (DE)
(74) Vertreter: BASF IP Association
(86) Internationale Anmeldenummer: PCT/EP2018/061157
(87) Internationale Veröffentlichungsnummer: WO 2018/210562

(56) Entgegenhaltungen:
- EP-A1- 1 749 565
- WO-A1-99/48602
- US-A1- 2014 195 055

## Beschreibung

Die vorliegende Erfindung betrifft ein neues Produktionssystem zur Herstellung von Formulierungen. Die vorliegende Erfindung betrifft zudem ein Verfahren zur kontinuierlichen Herstellung von Formulierungen, beispielsweise Lacken, welches bevorzugt unter Einsatz des Produktionssystems durchgeführt wird.

### Stand der Technik

Formulierungen, das heißt mehr oder minder komplexe Vielkomponentensysteme, und deren Herstellung sind zentraler Bestandteil verschiedenster Industriezweige. Beispielhaft sei die Lackindustrie, die Lebensmittelindustrie oder auch die Medizinindustrie genannt. Entsprechende Produkte (Formulierungen) werden durch physikalisches Mischen flüssiger (fließfähiger) und fester Stoffe (Rohstoffe) und/oder von zuvor aus entsprechenden Rohstoffen hergestellten Zwischenprodukten hergestellt.

Produktionssysteme und entsprechende Verfahren zur Herstellung von Formulierungen sind allgemein bekannt. Sie enthalten üblicherweise einen oder mehrere Vermischungsbehältnisse (Prozessmischer), in denen die Komponenten des herzustellenden Materials nach vorheriger Einwaage zusammengemischt werden.

Die hohe Bandbreite an herzustellenden Produkten (Formulierungen), die in der industriellen Produktion besteht, geht häufig einher mit einer ebenfalls enormen Komplexität an einzusetzenden Rohstoffen und Zwischenprodukten (gemeinsam auch Einsatzstoffe zur Produktion von Produkten (Formulierungen) genannt, wobei auch Zwischenprodukte bereits als Formulierung bezeichnet werden können, sodass der Terminus bei ansonsten fehlender Spezifizierung als Oberbegriff für Produkte und Zwischenprodukte gilt).

Wichtig ist weiterhin, dass viele Rohstoffe, wie insbesondere Harze, Pigmente und Additive, beispielsweise aufgrund teils komplexer Herstellungsprozesse, nicht immer mit vollständig gleichbleibenden Eigenschaften geliefert und dann eingesetzt werden können. Die dann bestehenden individuellen Eigenschaftsprofile können beim Einsatz in der Produktion von Formulierungen zu unvorhersehbaren Änderungen der Eigenschaften des produzierten Materials führen. So wird in der Regel eine Formulierung auf Basis dokumentierter Rezeptvorgaben produziert. Weicht dann der zu bestimmende Ist-Zustand des hergestellten Materials zu weit von dem gewünschten und grundsätzlich erwarteten Soll-Zustand ab, muss das außerhalb der Spezifikationen liegende Material angepasst werden.

Hinzu kommt, dass auch in modernen Produktionsanlagen die Einwaage beziehungsweise Dosierung von Einsatzstoffen nur mit begrenzter Genauigkeit erfolgen kann. Bereits geringfügige Abweichungen können insbesondere zusammen mit den oben beschriebenen nicht konstanten Eigenschaftsprofilen von Einsatzstoffen zu Abweichungen der Eigenschaften des hergestellten Materials führen. Entsprechende Anpassungen des hergestellten Materials sind also unvermeidbar.

Im Stand der Technik wird dieses Problem in der Regel durch die Bestimmung von Eigenschaften des hergestellten Materials (Ist-Zustand), die Bestimmung der Abweichungen des Ist-Zustands vom Soll-Zustand und anschließende Zugabe von ein oder mehreren Einsatzstoffen in das hergestellte Material zur Herstellung des Soll-Zustands gelöst.

EP 1 749 565 A1 zeigt ein Verfahren nach dem Obergriff des Anspruchs 1.

Nachteilig an dieser Form der Anpassung ist einerseits, dass lediglich durch die Zugabe von Einsatzstoffen eine Anpassung erfolgen kann. Die Anpassung ist also auf eine vertretbare Art und Weise nur in eine Richtung möglich. Ist beispielsweise die Viskosität des hergestellten Materials zu hoch, ist durch den nachträglichen Zusatz von Lösemitteln ein Herabsetzen der Viskosität möglich. Eine zu niedrige Viskosität durch den Zusatz von einer Vielzahl von beispielsweise Harzkomponenten und Additiven in spezifischen Verhältnissen auszugleichen, ist nicht praktikabel. Selbiges gilt, wenn beispielsweise der Farbton eines Materials, beispielsweise eines Automobillacks, angepasst werden soll. Ist eine zu hohe Menge des zugrundeliegenden Pigments beziehungsweise der entsprechenden Farbpaste enthalten, ist die Anpassung über den Zusatz weiterer Komponenten extrem aufwendig.

Weiterhin nachteilig ist die Tatsache, dass der gesamte Herstellungsprozess, umfassend die eigentliche Chargenherstellung und die erst nachträgliche Anpassung, sehr zeitintensiv ist.

### Aufgabe

Aufgabe der vorliegenden Erfindung war es, ein Produktionssystem zur Herstellung von Formulierungen bereitzustellen, das die vorbeschriebenen Nachteile zu überwinden weiß und die im Rahmen industrieller Produktionsprozesse unausweichlich notwendige Anpassung von hergestelltem Material in prozesstechnischer und zeitlicher Hinsicht zu verbessern. Auf diese Weise sollte es insbesondere möglich sein, farb- und/oder effektgebende Lacke, beispielsweise Automobillacke, effektiv herzustellen.

### Technische Lösung

Gefunden wurde ein Verfahren gemäss Anspruch 1.

Durch das erfindungsgemäße Verfahren wird ermöglicht, die oben beschriebenen Nachteile des Stands der Technik zu überwinden und in prozesstechnischer und zeitlicher Hinsicht die notwendige Anpassung von hergestellten Formulierungen zu verbessern.

### Beschreibung

### Produktionssystem

Das Produktionssystem umfasst eine Einheit (1) beziehungsweise eine Untereinheit (1.1).

Der Terminus Einheit oder Untereinheit umschreibt dabei erfindungsgemäß die abgrenzbaren Eigenschaften und individuellen Funktionen der jeweiligen Einheit oder Untereinheit. Es ist beispielsweise nicht notwendig, dass zwei Einheiten oder Untereinheiten räumlich beziehungsweise physisch klar voneinander getrennt sind und/oder das eine Untereinheit einen für sich räumlich und/oder physisch individualisierten Bereich darstellt. So kann beispielsweise eine Untereinheit viele unterschiedliche Bereiche umfassen. Diese Bereiche können jeweils direkt neben- oder übereinanderliegen. Genauso können sie aber auch ganz oder teilweise räumlich voneinander getrennt vorliegen, wobei dann beispielsweise andere Bereiche, Einheiten oder Untereinheiten des Produktionssystems in entsprechenden Trennbereichen angeordnet sind.

Es ist bevorzugt, dass die Untereinheit (1.1) zur kontinuierlichen Herstellung flüssiger Produkte (Formulierungen) eingerichtet ist. Zudem ist sie bevorzugt geeignet, jedwede Form von Zwischenprodukten, insbesondere flüssigen Zwischenprodukten, herzustellen. Dies gilt sowohl für aus festen und flüssigen Rohstoffen hergestellte Zwischenprodukte, als auch aus nur flüssigen Rohstoffen hergestellte Zwischenprodukte. Genauso gilt dies für Zwischenprodukte, die aus zuvor hergestellten Zwischenprodukten oder aus zuvor hergestellten Zwischenprodukten und festen und/oder flüssigen Rohstoffen hergestellt werden.

Darunter bevorzugt ist, dass die Untereinheit (1.1) zur Herstellung von Produkten und Zwischenprodukten unter ausschließlichem Einsatz von flüssigen Einsatzstoffen und/oder Einsatzstoffen, die durch Vorbehandlung als flüssige Einsatzstoffe eingesetzt werden können, eingerichtet ist. Eine entsprechende Vorbehandlung kann beispielsweise durch Schütteln, Aufrühren und/oder Taumeln sowie Erwärmen stattfinden.

Wie die Untereinheit (1.1) in diesem Zusammenhang einzurichten ist, weiß der Fachmann und ergibt sich zudem auch aus nachstehender Beschreibung (Mischvorrichtungen für flüssige Einsatzstoffe, fluidleitende Verbindungen zwischen Prozessmischer und Puffertank, Mittel (M), die zur Zuführung definierter Mengen von flüssigen Einsatzstoffen eingerichtet sind).

Der Zustand flüssig (fließfähig) bezieht sich im Rahmen der vorliegenden Erfindung, sofern nicht anders angegeben, jeweils auf eine Temperatur von 20°C, Normaldruck (1013,25 hPa) sowie eine Scherbelastung von 1000 s⁻¹ für eine Minute. Hat eine Komponente bei diesen Bedingungen eine Viskosität von nicht mehr als 10000 mPas (gemessen beispielsweise mit dem Gerät Rheomat RM 180 der Firma Mettler-Toledo), wird sie grundsätzlich als flüssig bezeichnet.

Einsatzstoffe, die durch Vorbehandlung als flüssige Einsatzstoffe eingesetzt werden können, sind wie folgt zu verstehen. Es ist selbstverständlich möglich, beispielsweise Rohstoffe und Zwischenprodukte, die zur Produktion von Produkten eingesetzt werden sollen, und bei den oben beschriebenen grundsätzlichen Bedingungen nicht als flüssig zu bezeichnen sind, so vorzubehandeln, dass sie per hier gültiger Definition als flüssiger Einsatzstoff eingesetzt werden können (Viskosität von nicht mehr als 10000 mPas).

Ganz besonders bevorzugt ist, dass die Untereinheit (1.1) zur kontinuierlichen Herstellung von farbigen und/oder effektgebenden flüssigen Formulierungen unter ausschließlichem Einsatz von flüssigen Einsatzstoffen und/oder Einsatzstoffen, die durch Vorbehandlung als flüssige Einsatzstoffe eingesetzt werden können, eingerichtet ist.

Entsprechende Formulierungen sind insbesondere Lacke, die farb- und/oder effektgebende Pigmente enthalten, beispielsweise unifarbene Basislacke oder effektgebende Basislacke. Auch Lacke wie Füller, die in der Regel Weiß- und/oder Schwarzpigmente enthalten, sind grundsätzlich den farbigen Formulierungen zuzuordnen. Als Einsatzstoffe zur Herstellung dieser Formulierungen kommen insbesondere Farb- und/oder Effektpasten sowie die in einer weiter unten beschriebenen Untereinheit (1.2) hergestellten Zwischenprodukte (Mischlacke) in Frage. Möglich ist selbstverständlich zudem der Einsatz von flüssigen Rohstoffen.

Die Untereinheit (1.1) umfasst ein oder mehrere Kombinationen von mindestens zwei unterschiedlichen Behältnissen, wobei innerhalb einer solchen Kombination das erste Behältnis ein kleinvolumiger Prozessmischer (kP) ist und das zweite Behältnis einen Puffertank für aus dem Prozessmischer (kP) ausgelassene Mischungen, bevorzugt flüssige Mischungen, darstellt. Darin grundsätzlich einsetzbare Mischvorrichtungen, beispielsweise Dissolver, sind dem Fachmann bekannt. Über die Mischvorrichtungen ist eine Durchmischung von Einsatzstoffen und damit die Herstellung von insbesondere flüssigen Formulierungen gewährleistet (Prozessmischer) beziehungsweise die hergestellten Zusammensetzungen können zur Verhinderung von Absetzprozessen homogenisiert gehalten werden (Puffertank). Prozessmischer und Puffertank sind miteinander verbunden, sodass im Prozessmischer hergestellte Mischungen, beispielsweise Zwischenprodukte oder Produkte, gezielt in den Puffertank überführt werden können. Technisch ist dies problemlos über eine entsprechende Verrohrung, bevorzugt fluidleitende Verrohrung, und Zwischenschaltung von Fördermitteln wie Pumpen sowie Ventilen erreichbar.

Die Einheit (1.1) umfasst also zunächst einen kleinvolumigen Prozessmischer (kP), inklusive Mischvorrichtung. Bei den Mischvorrichtungen handelt es sich hier bevorzugt um Inline-Dissolver, statischer Mischer oder Mischer nach dem Rotor-Stator-Prinzip. Der Terminus kleinvolumig bezieht sich hier auf ein im Verhältnis zu im industriellen Produktionsmaßstab eingesetzten Prozessmischern (meist mehrere Tonnen Fassungsvolumen) signifikant geringeres Fassungsvolumen. Der Prozessmischer hat beispielsweise ein Fassungsvolumen von 0,1 bis 100 Litern, wie beispielsweise 0,5 bis 50 Liter oder auch 1 bis 20 Liter, insbesondere 1 bis 10 Liter, beispielsweise 5 Liter. Der Prozessmischer ist bevorzugt so eingerichtet, dass die Mischvorrichtung zwischen den Einlässen zur Zuführung von Einsatzstoffen und dem mindestens einen Auslass zur Abführung hergestellter Formulierungen angeordnet sind. Die in den Prozessmischer (kP) einfließenden Einsatzstoffe müssen dabei also vor dem Austritt aus dem Prozessmischer die Mischvorrichtung passieren. Das durch die geringe Größe des Prozessmischers vorgegebene kleine Mischvolumen und entsprechend hohe Energieeinträge durch die Mischvorrichtung ermöglichen eine effiziente Durchmischung der Einsatzstoffe im Rahmen einer kontinuierlichen Herstellung von Formulierungen. Unter kontinuierlicher Herstellung ist zu verstehen, dass die Einsatzstoffe zur Herstellung in kontinuierlichen, spezifisch anpassbaren Massenströmen in den Prozessmischer (kP) einströmen und die Einsatzstoffe dann in Form einer Mischung nach Passieren der Mischvorrichtung, das heißt als Formulierung, in einem ebenfalls kontinuierlichen Massenstrom den Prozessmischer über den oder die Auslässe wieder verlassen. Typische Leistungen der Mischvorrichtungen, beispielsweise eines Mischers nach dem Rotor-Stator-Prinzip, liegen im Bereich von 1 bis 250 kW, insbesondere 5 bis 200 kW, bevorzugt 25 bis 150 kW, nochmals bevorzugt 50 bis 125 kW oder auch 85 bis 95 kW, wobei der Fachmann die Leistung problemlos an die sonstigen Kenngrößen des Prozessmischers (kP), beispielsweise das Fassungsvolumen, anpassen kann (geringe Fassungsvolumina korrespondieren mit eher geringeren Leistungen). Die Umdrehungsgeschwindigkeiten können je nach Bauweise variieren, wobei typische Umdrehungsgeschwindigkeiten zwischen 1000-10000 U/min, insbesondere 2000-6000 U/min oder auch 3000-4000U/min liegen können. Bevorzugt ist der Prozessmischer während der Produktion komplett gefüllt und damit frei von Luft, sodass ohne Schaumbildung produziert werden kann.

Die Zuführung definierter Mengen von Einsatzstoffen in den Prozessmischer (kP) über die Mittel (M) erfolgt auf dem Fachmann in diesem Zusammenhang grundsätzlich bekannte Art und Weise.

So kann aus entsprechenden Reservoirs von Einsatzstoffen, beispielsweise Tanks und weiteren in dieser Hinsicht bekannten Ladeeinheiten, eine Überführung beziehungsweise Entnahme unter Einbindung von technischen Mitteln zur Überwachung und Regelung eines Massenstroms des jeweiligen Einsatzstoffes erfolgen.

Hierzu können die Mittel (M) Wägeeinheiten (beispielsweise Wägezellen) und/oder Massendurchflussmesser umfassen, welche den Stoffstrom überwachen und auch regeln und anpassen können, wodurch zunächst die Entnahme definierter Mengen aus Reservoirs von Einsatzstoffen möglich ist.

Im Zusammenhang mit flüssigen Einsatzstoffen, welche bevorzugt sind, ist hierbei die Dimensionierung des jeweiligen Massendurchflussmessers von den Stoffströmen und der Viskosität der Einsatzstoffe abhängig. Die Regelung des Stoffstromes (Massenstroms) erfolgt beispielsweise über allgemein verfügbare Fördermittel, beispielsweise Pumpen, deren Förderleistung sich in einem weiten Bereich einstellen lässt und/oder ein Regelventil, welches die Förderleistung über die Drosselung des Strömungsquerschnitts beeinflussen kann. Wo genau sich die einzelnen Elemente, beispielsweise die Regelventile, in der Gesamtkonstruktion befinden, ist individuell anpassbar. Sie können sich beispielsweise in direkter Nähe zu den Fördermitteln, aber auch in direkter Nähe zu wie weiter unten genannten Sammelleitungen befinden. Sie können sich sogar innerhalb einer Sammelleitung befinden. Die Dosiergenauigkeit bekannter Systeme beträgt mindestens 1%, bezogen auf den Wert der Zugabe. Ferner ist es möglich, die Dosiergeschwindigkeit auf einen Zielwert zu begrenzen.

Im Zusammenhang mit festen Einsatzstoffen, die grundsätzlich ebenfalls eingesetzt werden können, kann die Regelung des Massenstroms über die Vibration eines Kegels und/oder den Antrieb einer Schnecke erfolgen. Auch eine Vibrationseinheit oder Ähnliches (falls zur Unterstützung der Feststofffließeigenschaften notwendig) kann vorhanden sein. Die Dosiergenauigkeit bekannter Systeme beträgt mindestens 2%, bezogen auf den Wert der Zugabe. Ferner ist es möglich, die Dosiergeschwindigkeit beispielsweise auf ein Kilogramm pro Sekunde zu begrenzen. In diesem Fall umfassen die Mittel (M) also jedenfalls Mittel zur Bestimmung einer Entnahmemenge (insbesondere Wägezellen). Zudem umfassen sie Steuerungsmittel für die eigentlichen Mimiken zur Entnahme (das heißt beispielsweise Kegel oder Schnecken). Die Steuerungsmittel wären dann insbesondere über eine elektronische Steuerungseinheit ausgestaltet, die unter Berücksichtigung der durch die Wägezellen ermittelten Informationen die Mimik zur Entnahme ansteuert und den Entnahmeprozess den Vorgaben entsprechend regelt und anpasst.

Entsprechende Vorgaben zur Einstellung des Massenstroms und damit der pro Zeiteinheit oder insgesamt zugeführten Mengen von Einsatzstoffen können elektronisch gesteuert über Rezeptvorgaben erhalten werden.

Die Mittel (M) sind zudem zur eigentlichen Zuführung der definierten Mengen von Einsatzstoffen in den Prozessmischer eingerichtet. Hierzu umfassen die Mittel (M) beispielsweise Verrohrungssysteme, insbesondere fluidleitende Verrohrungssysteme, die die definierten Mengen in den Prozessmischer überführen.

Die Zuführung der Einsatzstoffe erfolgt bevorzugt wie folgt.

Zunächst werden als Hauptstoffströme, insbesondere über fluidleitende Verrohrungen und gegebenenfalls Zwischenschaltung von schon beschriebenen Massendurchflussmessern sowie Fördermitteln wie Pumpen und zudem Ventilen, direkt aus der unten beschriebenen Untereinheit (1.2) darin hergestellte Zwischenprodukte, insbesondere klare Zwischenprodukte, zugeführt. Vorgaben zur Einstellung des Massenstroms können elektronisch gesteuert über Rezeptvorgaben erhalten werden.

Weiterhin werden zur Einbringung von Farb- und/oder Effektpigmenten sowie funktionalen Füllstoffen bevorzugt zuvor hergestellte flüssige Zwischenprodukte, beispielsweise Farb- und/oder Effektpasten, eingesetzt. Auch solche Einsatzstoffe werden letztlich durch entsprechende fluidleitende Verrohrungen, die den Mitteln (M) zuzuordnen sind, zugeführt. Entsprechende Vorgaben zur Einstellung des Massenstroms und damit der pro Zeiteinheit oder insgesamt zugeführten Mengen von Einsatzstoffen können elektronisch gesteuert über Rezeptvorgaben erhalten werden.

Der aus dem Prozessmischer (kP) ausgelassene Massenstrom wird dann über fluidleitende Verrohrungen in einen Puffertank, inklusive Mischvorrichtungen zur Verhinderung von Absetzprozessen, überführt. Der Puffertank hat dabei beispielsweise ein Fassungsvolumen von 0,1 bis 60 Tonnen, wie beispielsweise 0,5 bis 30 Tonnen oder auch 1 bis 15 Tonnen beziehungsweise 2 bis 5 Tonnen und wird kontinuierlich durch das aus dem Prozessmischer (kP) ausgelassene Material aufgefüllt. Er ist natürlich größer als der ihm zugeordnete Prozessmischer (kP).

Der Vorteil des beschriebenen Anlagenkonzepts von Kombinationen von Prozessmischern (kP) und Puffertanks liegt darin, dass auf diese Weise eine besonders effektive, exakte und innerhalb der Prozessführung anpassbare Herstellung von Formulierungen und Zwischenprodukten unabhängig von der Chargengröße erfolgen kann.

Es wird beispielsweise begonnen, eine Charge eines herzustellenden Materials über den Prozessmischer (kP) auf Basis von insbesondere elektronisch dokumentierten Rezeptvorgaben kontinuierlich zu produzieren. Abhängig von den Eigenschaften des zu Beginn der Chargenproduktion produzierten Materials (Ist-Zustand), den gewünschten Eigenschaften des insgesamt herzustellenden Materials (Soll-Zustand) und der Größe (Masse, Volumen) der Charge kann eine gezielte Anpassung der Zuführung von Einsatzstoffen bei der Herstellung erfolgen. Hierdurch können beispielsweise Eigenschaftsschwankungen der eingesetzten Einsatzstoffe, die bei festgelegten Massenströmen zur Herstellung von Material mit einem vom Soll-Zustand abweichenden Ist-Zustand führen können, ausgeglichen werden. Durch das vergleichsweise große beziehungsweise individuelle auszurichtende Fassungsvolumen des Puffertanks ist zudem gewährleistet, dass die Größe der Charge noch nachträglich angepasst werden kann. Allerdings ist darauf hinzuweisen, dass im Rahmen der erfindungsgemäßen Untereinheit (1.1) aufgrund der speziellen Kombination unterschiedlicher Komponenten, insbesondere der nachstehend beschriebenen Messeinrichtung, der Auswerteeinrichtung sowie der Einrichtung zur Anpassung der Zuführung von Einsatzstoffen eine solche nachträgliche Anpassung der Chargengröße in der Regel nicht mehr notwendig ist. Vielmehr kann durch die Untereinheit ein Material im Soll-Zustand in exakt der zuvor festgelegten Menge produziert werden. Weitere Details hierzu werden auch weiter unten im Rahmen des erfindungsgemäßen Verfahrens beschrieben.

Demzufolge weist die Untereinheit (1.1) zudem eine Messeinrichtung zur Ermittlung von Eigenschaften einer im Prozessmischer (kP) hergestellten, bevorzugt flüssigen Formulierung beziehungsweise Teilmenge dieser Formulierung auf. Die Messeinrichtung kann beispielweise der fluidleitenden Verrohrung (Verbindung) von Prozessmischer (kP) und Puffertank zugeordnet sein. Dies bedeutet, über die Verrohrung (beziehungsweise die entsprechenden verbindenden Leitungssysteme) kann hergestelltes flüssiges Material abgezweigt werden und schließlich in eine Messeinrichtung überführt werden. Die Überführung in die Messeinrichtung kann automatisiert oder auch händisch erfolgen. In der Messeinrichtung können dann automatisiert oder händisch veranlasst verschiedene Eigenschaften des flüssigen Materials wie beispielsweise Viskosität, pH-Wert, Farbe, Dichte, Leitfähigkeit und Temperatur erfasst werden. Möglich ist auch, dass die Messeinrichtung innerhalb des Leitungssystems angeordnet ist und beispielsweise über ein oder mehrere Sensoren zur Erfassung von Eigenschaften des flüssigen Materials automatisiert eine Analyse stattfindet.

Ebenfalls umfasst die Untereinheit (1.1) eine mit der Messeinrichtung kommunizierende Auswerteinrichtung zur Bestimmung einer Abweichung von Eigenschaften des im Prozessmischer hergestellten Materials (Ist-Zustand) und den entsprechenden Eigenschaften eines vordefinierten Soll-Zustands. Auch diese Auswertung kann beispielsweise automatisiert durch Vergleich von elektronisch übertragenden Eigenschaftsdaten des Ist-Zustands mit elektronisch dokumentierten Daten des Soll-Zustands erfolgen (Vergleich von Ist-Zustand mit Referenzwerten).

Nicht zuletzt umfasst die Einheit (1.1) eine spezielle Einrichtung zur Anpassung der Zuführung von Einsatzstoffen in den Prozessmischer.

Die Einrichtung zur Anpassung der Zuführung von Einsatzstoffen ist dabei, beispielsweise über eine elektronische Informationsübertragungseinheit, mit der Auswerteeinheit verbunden, kann also mit dieser kommunizieren.

Ist nun beispielsweise zu Beginn der kontinuierlichen Chargenproduktion das hergestellte Material hinsichtlich relevanter Eigenschaften vermessen worden und sind diese Eigenschaften mit einem Soll-Zustand verglichen worden, so kann die weitere kontinuierliche Herstellung unter Anpassung der Zuführung von Einsatzstoffen in den Prozessmischer durchgeführt werden. Dabei ist es von Vorteil, die Eigenschaften des produzierten Materials in spezifischen Zeitabständen oder kontinuierlich regelmäßig zu vermessen und mit dem Soll-Zustand zu vergleichen, um hierdurch eine iterative Anpassung der Zuführung von Einsatzstoffen zu ermöglichen. Im Ergebnis kann dann eine Charge von innerhalb der Spezifikationen liegendem Material erhalten werden, das heißt Material, das - innerhalb akzeptabler Fehlergrenzen - den Soll-Zustand ausweist.

Letztlich geht es darum, unter Berücksichtigung der Abweichungen der Eigenschaften einer kontinuierlich hergestellten Teilmenge einer Formulierung von den Eigenschaften eines vordefinierten Soll-Zustands die zugeführten Mengen von Einsatzstoffen bei der kontinuierlichen Herstellung weiterer Teilmengen anzupassen.

Diese Anpassung ist auf unterschiedliche Arten möglich, insbesondere zwei unterschiedliche Arten.
(i) Beispielsweise kann eine im Vergleich zum Soll-Zustand überproportionale Herabsetzung oder Heraufsetzung des Massenstroms von einem oder mehreren Einsatzstoffen erfolgen, um letztlich ein innerhalb der Spezifikationen liegendes Material zu erhalten. Das heißt, über die mittels der Auswerteeinheit erfassten Abweichungen zwischen dem Ist-Zustand einer ersten kontinuierlich hergestellten Teilmenge einer Formulierung und dem Soll-Zustand kann eine Anpassung von insgesamt und/oder pro Zeiteinheit zugeführten Mengen von Einsatzstoffen zum Prozessmischer erfolgen. Ist im Rahmen der Herstellung der ersten kontinuierlich hergestellten Teilmenge ein zu hoher Anteil eines ersten Einsatzstoffes eingesetzt worden, erfolgt beispielsweise eine im Vergleich zum Soll-Zustand überproportionale Herabsetzung der zugeführten Menge bei der kontinuierlichen Herstellung weiteren Materials, um insgesamt ein innerhalb der Spezifikationen liegendes Material zu erhalten. Entsprechend umgekehrt verläuft es bei zu niedrigen Anteilen von Einsatzstoffen.
   Die im Vergleich zum Sollzustand überproportionale Herabsetzung und/oder Heraufsetzung der zugeführten Mengen von Einsatzstoffen und damit Ausgleich von zu viel oder zu wenig eingesetzten Einsatzstoffen kann dabei in unterschiedlichen Dosierprofilen erfolgen. So kann beispielsweise ein Ausgleich kontinuierlich über die gesamte Weiterproduktion der Charge erfolgen. Genauso kann der Ausgleich in einem oder mehreren Anpassungsintervallen erfolgen. So kann beispielsweise nach Erhalt der Anpassungsdaten (Anpassungsmengen) zunächst Formulierungsmaterial im Soll-Zustand produziert werden, wobei dann erst zum Ende der Produktion der Charge der Ausgleich erfolgt. Genauso kann direkt nach Erhalt der Anpassungsdaten (Anpassungsmengen) der Ausgleich erfolgen, wobei dann im Anschluss daran Formulierungsmaterial im Soll-Zustand produziert wird.
(ii) Zu beachten ist allerdings, dass durch den im Vergleich zum Puffertank sehr kleinen Prozessmischer (kP) trotz hoher Durchflussraten in der Regel die Materialflusseinstellungen zum Erhalt des Sollzustands erreicht werden, bevor beispielsweise 5 Massenprozent des Chargenvolumens produziert worden sind. In diesem Fall kann dann die Anpassung des Massenstroms von einem oder mehreren Einsatzstoffen an den Soll-Zustand erfolgen, um letztlich ein innerhalb der Spezifikationen liegendes Material zu erhalten. Es wird also unter Wahrung der Einstellungen zum Erhalt des Sollzustands produziert und in den Puffertank abgelassen, ohne eine im Vergleich zum Soll-Zustand überproportionale Anpassung der Massenströme von Einsatzstoffen durchzuführen. Es wird dann eine Charge von innerhalb der Spezifikationen liegendem Material erhalten, in der das zu Beginn produzierte Material verschnitten ist. Auch wenn auf diese Weise der Soll-Zustand nicht in einer solchen Exaktheit wie bei der Anpassung (i) erhalten wird, sind die Spezifikationen erfüllt.

Die Anpassung der Zuführung von Einsatzstoffen kann unter automatisierter Anpassung der aus entsprechenden Reservoirs entnommenen Mengen von Einsatzstoffen über die Mittel (M) und damit auch Anpassung der Zuführung in den Prozessmischer erfolgen. Wie bereits oben beschrieben, kann die grundsätzlich zugeführte Menge von Einsatzstoffen über die Regelung des Massenstroms erfolgen. Genauso kann natürlich der Massenstrom von Einsatzstoffen nachgeregelt und damit angepasst werden. Dies erfolgt dann unter Verwertung der aus der Auswerteeinheit erhaltenen Informationen.

Ein Übertrag von Informationen aus der Auswerteeinheit erfolgt bevorzugt unter Einbindung elektronischer Informationsübertagungseinheiten.

Die Einrichtung zur Anpassung der Zuführung von Einsatzstoffen ist demzufolge bevorzugt als elektronische Steuerungseinheit ausgestaltet, die elektronisch übertragene Eigenschaftsdaten aus der Auswerteeinheit verarbeitet, gegebenenfalls mit weiteren relevanten Eingabeparametern, insbesondere der Gesamtmenge an herzustellender Formulierungsmenge, korreliert, Justiermengen von Einsatzstoffen ermittelt und dann elektronisch eine Anpassung der Zuführung von Einsatzstoffen veranlasst. Selbstverständlich ist es dazu notwendig, dass die eigentlichen Dosiermimiken, die die technischen Mittel zur Nachregelung und damit Anpassung des Massenstroms aufweisen (Mittel (M)) über die elektronische Steuerungseinheit elektronisch ansteuerbar sind.

Aus obigem ergibt sich selbstverständlich, dass die Einrichtung zur Anpassung der Zuführung von Einsatzstoffen hinsichtlich der eigentlichen Anpassung bevorzugt so eingestellt ist, dass nach der Herstellung der Gesamtcharge diese Gesamtcharge den Soll-Zustand aufweist (das heißt innerhalb der Spezifikationen liegt). Dies bedeutet also, dass die entsprechenden Justiermengen von Einsatzstoffen, die zur Einstellung des Soll-Zustands der Gesamtcharge notwendig sind, in der Einrichtung zur Anpassung ermittelt werden, bevor diese dann eine entsprechende Anpassung der Zuführung von Einsatzstoffen veranlasst.

Die in der Untereinheit (1.1) hergestellten Gesamtchargen von Formulierungen können dann auf an sich bekannte Weise abgefüllt werden. Hierzu können an entsprechenden Positionen Ladeeinheiten, beispielsweise Lieferemballagen, vorgehalten werden, die bei Bedarf aus dem Puffertank befüllt werden. Die Abfüllung kann dann über Einbindung typischer Vorrichtungen wie Abfüllköpfen mit Abfülllanzen erfolgen, beispielsweise in einer dafür vorgesehenen dezidierten Abfülleinheit des Produktionssystems.

Aus obigem folgt, dass die Mittel (M) bevorzugt solche Mittel umfassen, die zur direkten Zuführung definierter Mengen flüssiger Zwischenprodukte aus der nachstehend beschriebenen Untereinheit (1.2), welche in der Untereinheit (1.2) hergestellt wurden, eingerichtet sind.

Die Einheit (1) umfasst bevorzugt eine weitere Untereinheit (1.2) zur Herstellung von Formulierungen und Zwischenprodukten unter Einsatz von flüssigen Einsatzstoffen und/oder Einsatzstoffen, die durch Vorbehandlung als flüssige Einsatzstoffe eingesetzt werden können, umfassend
a. mindestens eine Kombination aus einem Prozessmischer und einem Puffertank, wobei Prozessmischer und Puffertank Mischvorrichtungen enthalten,
b. mindestens eine fluidleitende Verbindung zwischen Prozessmischer und Puffertank zur Überführung von im Prozessmischer hergestellten Teilchargen von Formulierungen aus dem Prozessmischer in den Puffertank,
c. Mittel zur Zuführung definierter Mengen von Einsatzstoffen in den Prozessmischer,
d. mindestens eine Messeinrichtung zur Ermittlung von Eigenschaften einer im Prozessmischer hergestellten Teilcharge einer Formulierung,
e. mindestens eine mit der Messeinrichtung kommunizierende Auswerteinrichtung zur Bestimmung einer Abweichung von Eigenschaften von im Prozessmischer hergestellten Teilchargen von den Eigenschaften eines vordefinierten Soll-Zustands,
f. mindestens eine mit der Auswerteeinheit kommunizierende Einrichtung zur Anpassung der Zuführung definierter Mengen von Einsatzstoffen in den Prozessmischer, die dazu eingerichtet ist, unter Berücksichtigung der Abweichungen der Eigenschaften einer hergestellten Teilcharge von den Eigenschaften eines vordefinierten Soll-Zustands sowie der Anzahl und Größe weiterer Teilchargen die zugeführten Mengen von Einsatzstoffen bei der Herstellung weiterer Teilchargen anzupassen,
umfasst.

Es ist bevorzugt, dass die Untereinheit (1.2) zur Herstellung flüssiger Produkte (Formulierungen) eingerichtet ist. Zudem ist sie bevorzugt geeignet, jedwede Form von Zwischenprodukten, insbesondere flüssigen Zwischenprodukten, herzustellen. Dies gilt sowohl für aus festen und flüssigen Rohstoffen hergestellte Zwischenprodukte, als auch aus nur flüssigen Rohstoffen hergestellte Zwischenprodukte. Genauso gilt dies für Zwischenprodukte, die aus zuvor hergestellten Zwischenprodukten oder aus zuvor hergestellten Zwischenprodukten und festen und/oder flüssigen Rohstoffen hergestellt werden.

Darunter bevorzugt ist, dass die Untereinheit (1.2) zur Herstellung von Produkten und Zwischenprodukten unter ausschließlichem Einsatz von flüssigen Einsatzstoffen und/oder Einsatzstoffen, die durch Vorbehandlung als flüssige Einsatzstoffe eingesetzt werden können, eingerichtet ist. Eine entsprechende Vorbehandlung kann beispielsweise durch Schütteln, Aufrühren und/oder Taumeln sowie Erwärmen stattfinden.

Nochmals bevorzugt ist, dass in der Untereinheit (1.2) klare und weiße flüssige Formulierungen (Produkte und Zwischenprodukte) hergestellt werden, bevorzugt ausschließlich klare und weiße flüssige Formulierungen hergestellt werden. Ganz bevorzugt werden ausschließlich klare flüssige Formulierungen hergestellt. Ein klares Produkt ist beispielsweise ein Klarlack, ein klares Zwischenprodukt ist beispielsweise ein Mischlack, der später zur Herstellung von Produkten wie Lacken eingesetzt werden soll. Ein weißes Produkt ist beispielsweise ein unifarbener weißer Basislack. Grund dafür ist, dass insbesondere das beschriebene Anlagenkonzept mit einer Kombination aus Prozessmischer und Puffertank schnell und effizient ohne manuelle Eingriffe nach dem an sich bekannten CIP (Cleaning In Place) Verfahren gereinigt werden können.

Die Untereinheit (1.2) umfasst ein oder mehrere Kombinationen von mindestens zwei unterschiedlichen Behältnissen, wobei innerhalb einer solchen Kombination das erste Behältnis ein Prozessmischer ist und das zweite Behältnis einen Puffertank für aus dem Prozessmischer abgelassene Mischungen, bevorzugt flüssige Mischungen, darstellt. Darin einzusetzende Mischvorrichtungen, beispielsweise Dissolver, sind dem Fachmann bekannt. Über die Mischvorrichtungen ist eine Durchmischung von Einsatzstoffen und damit die Herstellung von insbesondere flüssigen Formulierungen gewährleistet (Prozessmischer) beziehungsweise die hergestellten Zusammensetzungen können zur Verhinderung von Absetzprozessen homogenisiert gehalten werden (Puffertank). Prozessmischer und Puffertank sind miteinander verbunden, sodass im Prozessmischer hergestellte Mischungen, beispielsweise Zwischenprodukte oder Produkte, gezielt in den Puffertank abgelassen werden können. Technisch ist dies problemlos über eine entsprechende Verrohrung, bevorzugt fluidleitende Verrohrung, und Zwischenschaltung von Fördermitteln wie Pumpen sowie Ventilen erreichbar. Innerhalb der Verbindungseinheit zwischen Prozessmischer und Puffertank kann auch noch eine weitere Mischvorrichtung, beispielsweise ein Inline-Dissolver, angeordnet sein. Sinnvoll ist dies, wenn ein aktueller Inhalt im Prozessmischer im Kreislauf gepumpt werden soll, um als Trägerstrom für weitere Einsatzstoffe, die dem Produktionsprozess zugeführt werden sollen, zu dienen. Dann kann die weitere Mischvorrichtung zur Durchmischung dieses Trägerstroms dienen.

Bevorzugt ist, dass innerhalb einer Kombination der Puffertank ein größeres Fassungsvolumen hat, als der Prozessmischer. Besonders bevorzugt hat der Puffertank im Vergleich zum Prozessmischer ein mindestens 2-faches Fassungsvolumen, insbesondere bevorzugt ein mindestens 3-faches Fassungsvolumen. Dabei hat der Prozessmischer beispielsweise ein Fassungsvolumen von 0,1 bis 60 Tonnen, wie beispielsweise 0,5 bis 30 Tonnen oder auch 1 bis 15 Tonnen beziehungsweise 2 bis 5 Tonnen.

Die Zuführung definierter Mengen von Einsatzstoffen in den Prozessmischer, insbesondere über die Realisierung einer spezifischen Massenstroms, kann insbesondere über Mittel erfolgen, die den oben beschriebenen Mitteln (M) ähnlich oder äquivalent sind. Entsprechende Vorgaben zur Einstellung des Massenstroms und damit der pro Zeiteinheit oder insgesamt zugeführten Mengen von Einsatzstoffen können elektronisch gesteuert über Rezeptvorgaben erhalten werden.

Die Mittel der Untereinheit (1.2) umfassen im Zusammenhang mit flüssigen Einsatzstoffen, die bevorzugt sind, insbesondere Sammelleitungen. Dies bedeutet, die aus Reservoirs entnommenen Einsatzstoffe werden zunächst über an sich bekannte fluidleitende Verrohrungssysteme in ein oder mehrere Sammelleitungen überführt, über welche sie dann dem Prozessmischer zugeführt werden.

Die Zuführung der Einsatzstoffe kann dabei automatisiert und elektronisch gesteuert in beliebiger Reihenfolge (sequentiell, parallel, teilweise parallel) erfolgen, um beispielsweise Einsatzstoffe, die in Reinform beziehungsweise hochkonzentriert miteinander reagieren und/oder unverträglich sind, getrennt voneinander dem Prozessmischer zuzuführen. Möglich ist in diesem Zusammenhang auch, dass der aktuelle Inhalt des Prozessmischers über die Sammelleitung im Kreislauf umgepumpt wird und als Trägerstrom für weitere Einsatzstoffe dient.

Die in den Prozessmischer zugeführten Einsatzstoffe werden dann über die entsprechenden Mischvorrichtungen vermischt.

Der Vorteil des beschriebenen Anlagenkonzepts von Kombinationen von Prozessmischern und Puffertanks liegt darin, dass auf diese Weise eine besonders effektive, exakte und innerhalb der Prozessführung anpassbare Herstellung von Formulierungen und Zwischenprodukten erfolgen kann.

Ist beispielsweise eine erste Teilcharge eines herzustellenden Materials im Prozessmischer auf Basis von insbesondere elektronisch dokumentierten Rezeptvorgaben hergestellt worden, so kann diese in den Puffertank überführt werden. Abhängig von den Eigenschaften der ersten Teilcharge (Ist-Zustand), den gewünschten Eigenschaften des insgesamt herzustellenden Materials (Soll-Zustand) und der Anzahl an insgesamt herzustellenden Teilchargen und/oder der Größe (Masse, Volumen) weiterer Teilchargen kann eine gezielte Anpassung der Zuführung von Einsatzstoffen bei der Herstellung einer oder mehrerer weiterer Teilchargen erfolgen. Hierdurch können insbesondere die eingangs beschriebenen Eigenschaftsschwankungen der eingesetzten Einsatzstoffe, die bei festgelegten Einsatzmengen zur Herstellung einer ersten Teilcharge mit einem vom Soll-Zustand abweichenden Ist-Zustand führen können, ausgeglichen werden. Weitere Details hierzu werden auch weiter unten im Rahmen des Verfahrens beschrieben.

Demzufolge weist die Untereinheit (1.2) zudem eine Messeinrichtung zur Ermittlung von Eigenschaften einer im Prozessmischer hergestellten, bevorzugt flüssigen Formulierung beziehungsweise einer ersten Teilcharge dieser Formulierung auf. Die Messeinrichtung kann beispielweise der bevorzugt fluidleitenden Verrohrung (Verbindung) von Prozessmischer und Puffertank zugeordnet sein. Dies bedeutet, über die Verrohrung (beziehungsweise die entsprechenden verbindenden Leitungssysteme) kann hergestelltes flüssiges Material abgezweigt werden und schließlich in eine Messeinrichtung überführt werden. Die Überführung in die Messeinrichtung kann automatisiert oder auch händisch erfolgen. In der Messeinrichtung können dann automatisiert oder händisch veranlasst verschiedene Eigenschaften des flüssigen Materials wie beispielsweise Viskosität, pH-Wert, Leitfähigkeit, Dichte, Temperatur erfasst werden. Möglich ist auch, dass die Messeinrichtung innerhalb des Leitungssystems angeordnet ist und beispielsweise über ein oder mehrere Sensoren zur Erfassung von Eigenschaften des flüssigen Materials automatisiert eine Analyse stattfindet.

Ebenfalls umfasst die Untereinheit (1.2) eine mit der Messeinrichtung kommunizierende Auswerteinrichtung zur Bestimmung einer Abweichung von Eigenschaften des im Prozessmischer hergestellten Materials (Ist-Zustand) und den entsprechenden Eigenschaften eines vordefinierten Soll-Zustands. Auch diese Auswertung kann beispielsweise automatisiert erfolgen (Vergleich von Ist-Zustand mit Referenzwerten).

Nicht zuletzt umfasst die Einheit (1.2) eine spezielle Einrichtung zur Anpassung der Zuführung von Einsatzstoffen in den Prozessmischer.

Die Einrichtung zur Anpassung der Zuführung von Einsatzstoffen ist dabei, beispielsweise über eine elektronische Informationsübertragungseinheit, mit der Auswerteeinheit verbunden, kann also mit dieser kommunizieren.

Ist nun eine erste hergestellte Teilcharge hinsichtlich relevanter Eigenschaften vermessen worden, diese Eigenschaften mit einem Soll-Zustand verglichen worden und die Teilcharge in den Puffertank überführt worden, so kann die Herstellung einer oder mehrerer weiterer Teilchargen unter Anpassung der Zuführung von Einsatzstoffen in den Prozessmischer durchgeführt werden. Im Ergebnis kann dann ein innerhalb der Spezifikationen liegendes Material erhalten werden, das heißt ein Material, dass - innerhalb akzeptabler Fehlergrenzen - den Soll-Zustand ausweist. So kann beispielsweise über die mittels der Auswerteeinheit erfassten Abweichungen zwischen Ist-Zustand der ersten Teilcharge und Soll-Zustand eine Anpassung von insgesamt und/oder pro Zeiteinheit zugeführten Mengen von Einsatzstoffen zum Prozessmischer bei einer oder mehreren weiteren Teilchargen erfolgen. Ist im Rahmen der Herstellung der ersten Teilcharge ein zu hoher Anteil eines ersten Einsatzstoffes eingesetzt worden, erfolgt beispielsweise eine im Vergleich zum Soll-Zustand überproportionale Herabsetzung der zugeführten Menge in einer oder mehreren weiteren Teilchargen, um insgesamt ein innerhalb der Spezifikationen liegendes Material zu erhalten. Entsprechend umgekehrt verläuft es bei zu niedrigen Anteilen von Einsatzstoffen.

Die Anpassung der Zuführung von Einsatzstoffen kann unter automatisierter Anpassung der aus entsprechenden Reservoirs entnommenen Mengen von Einsatzstoffen über die Mittel (M) und damit auch Anpassung der Zuführung in den Prozessmischer erfolgen. Wie bereits oben beschrieben, kann die grundsätzlich zugeführte Menge von Einsatzstoffen über die Regelung des Massenstroms erfolgen. Genauso kann natürlich der Massenstrom von Einsatzstoffen nachgeregelt und damit angepasst werden. Dies erfolgt dann unter Verwertung der aus der Auswerteeinheit erhaltenen Informationen.

Die Anpassung der Massenströme und die Ausgestaltung der Einrichtung zur Anpassung der Zuführung von Einsatzstoffen als elektronische Steuerungseinheit sind auf die bei Untereinheit (1.1) beschriebene Art und Weise möglich.

Aus obigem ergibt sich selbstverständlich, dass die Einrichtung zur Anpassung der Zuführung von Einsatzstoffen hinsichtlich der eigentlichen Anpassung bevorzugt so eingestellt ist, dass nach der Herstellung aller Teilchargen (das heißt der Gesamtcharge) die Gesamtcharge den Soll-Zustand aufweist (das heißt innerhalb der Spezifikationen liegt). Dies bedeutet also, dass die entsprechenden Justiermengen von Einsatzstoffen, die zur Einstellung des Soll-Zustands der Gesamtcharge notwendig sind, in der Einrichtung zur Anpassung ermittelt werden, bevor diese dann eine entsprechende Anpassung der Zuführung von Einsatzstoffen veranlasst.

Die in der Untereinheit (1.2) hergestellten Gesamtchargen von Formulierungen können dann auf an sich bekannte Weise abgefüllt werden. Hierzu können an entsprechenden Positionen Ladeeinheiten, beispielsweise Lieferemballagen, vorgehalten werden, die bei Bedarf aus dem Puffertank befüllt werden. Die Abfüllung kann dann über Einbindung typischer Vorrichtungen wie Abfüllköpfen mit Abfülllanzen erfolgen, beispielsweise in einer dafür vorgesehenen dezidierten Abfülleinheit des Produktionssystems.

Bevorzugt umfasst die Untereinheit (1.2) zudem eine Weiterleitungseinheit zur Weiterleitung von hergestellten Formulierungen, nämlich Zwischenprodukten, an die erfindungsgemäße Untereinheit (1.1). Auf diese Weise kann sehr prozesseffizient und ohne zwischenzeitliche Ab- oder Umfüllung das jeweilige Zwischenprodukt in der Untereinheit (1.1) zur weiteren Produktion eingesetzt werden.

Die vorliegende Erfindung betrifft ein Verfahren zur Herstellung von Formulierungen. Erfindungsgemäss ist das Verfahren gerichtet auf eine kontinuierliche Herstellung von farbigen und/oder effektgebenden flüssigen herzustellenden Formulierungen mit den Merkmalen des Anspruchs 1.

Die Anpassungsmengen im oben genannten Sinne können augenscheinlich sowohl positiv, als auch negativ sein. Eine positive Anpassungsmenge bedeutet, dass insgesamt ein höherer Anteil des jeweiligen Einsatzstoffes eingesetzt werden muss, um bei der insgesamt herzustellenden Formulierungsmenge den Soll-Zustand zu erreichen. Dies kann durch einen höheren Anteil des Einsatzstoffes bei der kontinuierlichen Weiterproduktion und/oder durch geringere Anteile anderer Einsatzstoffe bei der kontinuierlichen Weiterproduktion erfolgen. Entsprechend umgekehrt verhält es sich mit negativen Justiermengen.

Bevorzugt ist, dass die kontinuierliche Zuführung definierter Mengen von Einsatzstoffen in den Prozessmischer (kP) jedenfalls die direkte Zuführung von Zwischenprodukten, die in der bevorzugt existenten Untereinheit (1.2) hergestellt wurden, umfasst. Diese Einsatzstoffe werden also direkt aus der Untereinheit (1.2) zugeführt.

Möglich ist es, im Rahmen des erfindungsgemäßen Verfahrens die kontinuierliche Herstellung einer Formulierung durch Vermischen der Einsatzstoffe im Prozessmischer (kP) und Überführung der Formulierung in einen Puffertank mit Mischvorrichtung über eine fluidleitende Verbindung zwischen Prozessmischer (kP) und Puffertank für eine spezifische Zeitdauer zu unterbrechen. Dies bietet sich dann an, wenn die Messung und/oder Auswertung von Eigenschaften und/oder Abweichungen zwischen Ist-Zustand und Soll-Zustand vergleichsweise lange dauert. Wird dann die kontinuierliche Herstellung unterbrochen, bis Messung und Auswertung abgeschlossen sind und damit eine Anpassung der Zuführung von Einsatzstoffen in den Prozessmischer erfolgen kann, kann im Anschluss weiterproduziert werden. Dies bietet sich insbesondere dann an, wenn man plant, über die oben beschriebene Anpassungsmethode (ii) vorzugehen.

Es ist bevorzugt, dass in einem abschließenden Schritt die hergestellte Gesamtcharge in entsprechende Lieferemballagen abgefüllt wird und dann beispielsweise zur längerfristigen Lagerung in ein Lager überführt oder direkt an einen Kunden ausgeliefert wird.

Im Zusammenhang mit der bevorzugt (aber nicht zwingend) vorhandenen Untereinheit (1.2) umfasst das erfindungsgemäße Verfahren bevorzugt zudem folgende Schritte.
- Zuführung definierter Mengen von Einsatzstoffen in einen Prozessmischer, in dem eine Mischvorrichtungen zur Dispergierung und Durchmischung von Einsatzstoffen vorhanden ist,
- Herstellung einer Teilcharge einer Formulierung durch Vermischen der Einsatzstoffe im Prozessmischer,
- Überführung der Teilcharge in einen Puffertank mit Mischvorrichtung über eine Verbindung zwischen Prozessmischer und Puffertank,
- Ermittlung von Eigenschaften der Teilcharge vor, während oder nach der Überführung in den Puffertank durch eine Messeinrichtung,
- Bestimmung einer Abweichung von Eigenschaften der Teilcharge von den Eigenschaften eines vordefinierten Soll-Zustands durch eine Auswerteeinheit,
- Ermittlung der Justiermengen von Einsatzstoffen, die unter Berücksichtigung der Abweichungen der Eigenschaften der hergestellten Teilcharge vom Soll-Zustand sowie der Anzahl und Größe weiterer Teilchargen zur Einstellung des Soll-Zustands der Gesamtcharge notwendig sind,
- Herstellung mindestens einer weiteren Teilcharge im Prozessmischer, wobei die ermittelten Justiermengen bei der Herstellung mindestens einer der weiteren Teilchargen durch Anpassung der Zuführung von Einsatzstoffen in den Prozessmischer berücksichtigt werden,
- Überführung der mindestens einen weiteren Teilcharge in den Puffertank
- Vereinigung der mindestens einen weiteren Teilcharge mit der ersten Teilcharge und Vermischung aller Teilchargen zur Herstellung der Gesamtcharge.

Die Justiermengen im oben genannten Sinne können augenscheinlich sowohl positiv, als auch negativ sein. Eine positive Justiermenge bedeutet, dass insgesamt ein höherer Anteil des jeweiligen Einsatzstoffes eingesetzt werden muss, um den Soll-Zustand zu erreichen. Dies kann durch einen höheren Anteil des Einsatzstoffes bei der Produktion mindestens einer weiteren Teilcharge und/oder durch geringere Anteile anderer Einsatzstoffe bei der Produktion mindestens einer weiteren Teilcharge erfolgen. Entsprechend umgekehrt verhält es sich mit negativen Justiermengen.

Es hat sich gezeigt, dass im Zusammenhang mit nicht automatisierter Messung von Eigenschaften in der Messeinrichtung vorteilhaft wie folgt vorgegangen werden kann. Es werden insgesamt drei Teilchargen hergestellt, wobei die erste Teilcharge und die zweite Teilcharge auf dieselbe Weise produziert werden. Während der Produktion der zweiten Teilcharge werden Eigenschaften der ersten Teilcharge gemessen und hinsichtlich Abweichungen vom Soll-Zustand ausgewertet. Zudem werden die Justiermengen ermittelt. Die Produktion der dritten Teilcharge erfolgt dann unter Berücksichtigung der Justiermengen. Auf diese Weise verbleibt ausreichend Zeit, in der das Material der ersten Teilcharge vermessen werden kann. Sollte die Messung von Eigenschaften der ersten Teilcharge länger dauern, kann das Prinzip selbstverständlich ausgeweitet werden. Dann werden beispielsweise 4 Teilchargen hergestellt, wobei die Produktion der vierten Teilcharge dann unter Berücksichtigung der Justiermengen erfolgt.

Selbstverständlich ist es möglich, dass in dem Verfahren in einem weiteren Schritt die hergestellte Gesamtcharge in entsprechende Lieferemballagen abgefüllt wird und dann beispielsweise zur längerfristigen Lagerung in ein Lager überführt oder direkt an einen Kunden ausgeliefert wird. Dies ist im Rahmen der Herstellung von Produkten, beispielsweise Klarlacken oder vollständigen Komponenten von Lacken, beispielsweise Stammlack und Härter eines Zweikomponentenlacks, bevorzugt. Bei der Herstellung von Zwischenprodukten ist es bevorzugt, dass das Verfahren in einem abschließenden Schritt die Überführung der Zwischenprodukte in die erfindungswesentliche Untereinheit (1.1) umfasst.

Durch das erfindungsgemäße Verfahren ist gewährleistet, dass eine enorm prozesseffiziente und zeitsparende Herstellung von Formulierungen inklusive Anpassungsprozess ermöglicht wird.

## Patentansprüche

1. Verfahren zur kontinuierlichen Herstellung von farbigen und/oder effektgebenden flüssigen Formulierungen umfassend
- Kontinuierliche Zuführung von Einsatzstoffen in einen kleinvolumigen Prozessmischer (kP), in dem eine Mischvorrichtungen zur Durchmischung der Einsatzstoffe vorhanden ist,
- Kontinuierliche Herstellung einer Formulierung durch Vermischen der Einsatzstoffe im Prozessmischer (kP) und Überführung der Formulierung in einen Puffertank mit Mischvorrichtung über eine Verbindung zwischen Prozessmischer (kP) und Puffertank,
- Ermittlung von Eigenschaften der kontinuierlich hergestellten Formulierung durch eine Messeinrichtung, wobei die Messeinrichtung der Verbindung von Prozessmischer und Puffertank zugeordnet ist oder innerhalb des entsprechenden Leitungssystems angeordnet ist,
- Bestimmung einer Abweichung von Eigenschaften der kontinuierlich hergestellten Formulierung von den Eigenschaften eines vordefinierten Soll-Zustands durch eine Auswerteeinheit,
- **gekennzeichnet durch** Ermittlung der Anpassungsmengen von Einsatzstoffen, die unter Berücksichtigung der Abweichungen der Eigenschaften der kontinuierlich hergestellten Formulierung vom Soll-Zustand sowie der Gesamtmenge an herzustellender Formulierungsmenge zur Einstellung des Soll-Zustands der Gesamtmenge notwendig sind,
- Kontinuierliche Herstellung weiterer Teilmengen der Formulierung im Prozessmischer, wobei die ermittelten Anpassungsmengen durch Anpassung der Zuführung von Einsatzstoffen in den Prozessmischer berücksichtigt werden,
- Vereinigung der hergestellten Teilmengen zur Herstellung der Gesamtmenge.

2. Verfahren nach Anspruch 1, **dadurch gekennzeichnet, dass** die farbigen und/oder effektgebenden flüssigen Formulierungen unter Einsatz von flüssigen Einsatzstoffen und Einsatzstoffen, die durch Vorbehandlung als flüssige Einsatzstoffe eingesetzt werden können, hergestellt werden.

3. Verfahren nach Anspruch 2, **dadurch gekennzeichnet, dass** die Formulierungen unter ausschließlichem Einsatz von flüssigen Einsatzstoffen und Einsatzstoffen, die durch Vorbehandlung als flüssige Einsatzstoffe eingesetzt werden können, hergestellt werden.

4. Verfahren nach Anspruch 1 bis 3, **dadurch gekennzeichnet, dass** die kontinuierliche Zuführung von Einsatzstoffen unter Einsatz von Mitteln (M) erfolgt, wobei die Mittel (M) Vorrichtungen zur Entnahme definierter Mengen von Einsatzstoffen aus Reservoirs unter Einbindung technischer Mittel zur Überwachung und Regelung eines Massenstroms der jeweiligen Einsatzstoffe aufweisen.

5. Verfahren nach Anspruch 4, **dadurch gekennzeichnet, dass** die Mittel (M) zudem fluidleitende Verrohrungssysteme zur Überführung der definierten Mengen von Einsatzstoffen in den Prozessmischer umfassen.

6. Verfahren nach Anspruch 1 bis 5, **dadurch gekennzeichnet, dass** die in der Messeinrichtung ermittelten Eigenschaften Viskosität, pH-Wert, Farbe, Leitfähigkeit, Dichte und/oder Temperatur umfassen.

7. Verfahren nach Anspruch 1 bis 6, **dadurch gekennzeichnet, dass** die Anpassung der Zuführung von Einsatzstoffen so eingestellt ist, dass nach der Herstellung der Gesamtcharge diese Gesamtcharge einen anhand von Referenzwerten vordefinierten Soll-Zustand aufweist.

## Claims

1. Method for continuously manufacturing coloured and/or effect-imparting liquid formulations, comprising
- continuously feeding feedstocks into a small-volume process mixer (kP) in which there is a mixing device for mixing of the feedstocks,
- continuously manufacturing a formulation by mixing the feedstocks in the process mixer (kP) and transferring the formulation into a buffer tank with a mixing device via a connection between the process mixer (kP) and the buffer tank,
- ascertaining properties of the continuously manufactured formulation by means of a measurement unit, the measurement unit being assigned to the connection of process mixer and buffer tank or is arranged within the corresponding conduit system,
- determining a variance of properties of the continuously manufactured formulation from the properties of a predefined target state by means of an evaluation unit,
**characterized by**
- ascertaining the adjustment volumes for feedstocks that are needed in view of the variances in the properties of the continuously manufactured formulation from the target state and the total volume of formulation volume to be manufactured for establishment of the target state of the total volume,
- continuously manufacturing further portions of the formulation in the process mixer, taking account of the adjustment volumes ascertained by adjusting the feed of feedstocks into the process mixer,
- combining the manufactured portions for manufacture of the total volume.

2. Method according to Claim 1, **characterized in that** the coloured and/or effect-imparting liquid formulations are manufactured using liquid feedstocks and feedstocks that can be used as liquid feedstocks through pretreatment.

3. Method according to Claim 2, **characterized in that** the formulations are manufactured with exclusive use of liquid feedstocks and feedstocks that can be used as liquid feedstocks through pretreatment.

4. Method according to Claims 1 to 3, **characterized in that** the continuous feeding of feedstocks is effected using means (M), where the means (M) have devices for withdrawing defined amounts of feedstocks from reservoirs that incorporate technical means of monitoring and closed-loop control of a mass flow rate of the respective feedstocks.

5. Method according to Claim 4, **characterized in that** the means (M) additionally comprise fluid-conducting pipework systems for transfer of the defined amounts of feedstocks into the process mixer.

6. Method according to Claims 1 to 5, **characterized in that** the properties that are ascertained in the measurement unit include viscosity, pH, colour, conductivity, density and/or temperature.

7. Method according to Claims 1 to 6, **characterized in that** the adjustment of the feeding of feedstocks is set up such that, after the manufacture of the overall batch, this overall batch has a target state predefined by reference values.

## Revendications

1. Procédé pour la préparation en continu de formulations liquides colorées et/ou à effet comprenant
- l'alimentation en continu de matières premières dans un mélangeur de procédé de petit volume (kP), dans lequel est présent un dispositif de mélange pour le mélange des matières premières,
- la préparation en continu d'une formulation par mélange des matières premières dans le mélangeur de procédé (kP) et le transfert de la formulation dans un réservoir tampon doté d'un dispositif de mélange par l'intermédiaire d'une connexion entre le mélangeur de procédé (kP) et le réservoir tampon,
- l'identification de caractéristiques de la formulation préparée en continu par une installation de mesure, l'installation de mesure étant affectée au composé du mélangeur de procédé et du réservoir tampon ou étant disposée à l'intérieur du système de conduite correspondant,
- la détermination d'une déviation de propriétés de la formulation préparée en continu par rapport aux propriétés d'un état cible prédéfini par une unité d'évaluation,
**caractérisé par**
l'identification des quantités d'adaptation de matières premières qui sont nécessaires en tenant compte des déviations des propriétés de la formulation préparée en continu par rapport à l'état cible ainsi que de la quantité totale de quantité de formulation devant être préparée pour l'ajustement de l'état cible de la quantité totale,
- la préparation en continu d'autres quantités partielles de la formulation dans le mélangeur de procédé, les quantités d'adaptation identifiées étant prises en compte par l'adaptation de l'alimentation de matières premières dans le mélangeur de procédé,
- la réunion des quantités partielles préparées pour la préparation de la quantité totale.

2. Procédé selon la revendication 1, **caractérisé en ce que** les formulations liquides colorées et/ou à effet sont préparées en utilisant des matières premières liquides et des matières premières qui peuvent être utilisées, par prétraitement, en tant que matières premières liquides.

3. Procédé selon la revendication 2, **caractérisé en ce que** les formulations sont préparées en utilisant exclusivement des matières premières liquides et des matières premières qui peuvent être utilisées, par prétraitement, en tant que matières premières liquides.

4. Procédé selon les revendications 1 à 3, **caractérisé en ce que** l'alimentation en continu de matières premières est réalisée en utilisant des moyens (M), les moyens (M) présentant des dispositifs pour le prélèvement de quantités définies de matières premières à partir de réservoirs avec intégration de moyens techniques pour le contrôle et la régulation d'un flux massique des matières premières respectives.

5. Procédé selon la revendication 4, **caractérisé en ce que** les moyens (M) comprennent de plus des systèmes de tubage conduisant du fluide pour le transfert des quantités définies de matières premières dans le mélangeur de procédé.

6. Procédé selon les revendications 1 à 5, **caractérisé en ce que** les propriétés identifiées dans l'installation de mesure comprennent la viscosité, la valeur de pH, la couleur, la conductivité, la densité et/ou la température.

7. Procédé selon les revendications 1 à 6, **caractérisé en ce que** l'adaptation de l'alimentation de matières premières est ajustée de telle manière qu'après la préparation de la charge totale, cette charge totale présente un état cible prédéfini au moyen de valeurs de référence.
